# EUROPEAN PATENT SPECIFICATION

(11) **EP 2 418 872 B1**
(45) Date of publication and mention of the grant of the patent: **23.10.2013**
(21) Application number: 11183193.9
(22) Date of filing: 28.02.2002
(51) Int. Cl.: H04Q 11/00, H04N 1/00, H04N 7/18, H04N 7/10

(54) **Wireless multimedia system**
Drahtloses Multimedia-System
Système multimédia sans fil

(30) Priority: 28.02.2002 US 796270
(43) Date of publication of application: 15.02.2012
(62) Divisional of application: 02725035.6
(73) Proprietor: Eiger, Tuvia, East Meadow, NY 11554 (US); Berchin, Uriel, East Meadow, NY 11554 (US)
(72) Inventor: Eiger, Tuvia, East Meadow, NY 11554 (US); Berchin, Uriel, East Meadow, NY 11554 (US)
(74) Representative: Walker, Ross Thomson

(56) References cited:
- EP-A- 0 935 364
- WO-A-02/19623
- IT-B1- 1 281 947
- JP-A- 11 055 211

## Description

### BACKGROUND OF THE INVENTION.

### FIELD OF THE INVENTION.

This invention relates to a wireless distribution system for home or business compiling a unitary distribution box, called a wireless multimedia center, which has inputs for receiving signals from one or more sources. Signals are then re-broadcast throughout the site by low energy digital transmissions, at energy levels just above background radiation. These signals are transmitted to and received by individual transceivers, called end units (EU), located throughout the site.

JP-A-11055211 discloses a conventional communication system which uses orthogonal frequency division multiplexing.

The present invention seeks to provide an improved wireless multimedia device and method of using the same.

According to one aspect of the present invention, there is provided a wireless multimedia device as defined in claim 1 hereinafter.

According to another aspect of the present invention, there is provided a method of using a wireless multimedia device as defined in claim 7 hereinafter.

One embodiment of this invention relates to a wireless distribution system for home or business comprising a unitary distribution box, called a wireless multimedia center (WMC), which has inputs for receiving signals from one or more of a satellite dish; a terrestrial antenna such as a VHF/UHF; a cable line; a telephone or data line such as ISDN, DSL, etc.; and/or fiber optic line, and any other future data or program sources can also be transparently input to the WMC with appropriate modifications or modular plug-ins.

Signals input are then re-broadcast throughout the premises by low energy digital transmissions, at energy levels just above background radiation. These signals are transmitted to and received by individual transceivers, called end units (EU), located throughout the premises. These EU transceivers are presently contemplated as a video end unit (VEU) for TV and radio, and a communications end unit (CEU), for telephone and data.

The data channel instructs the WMC which program and data signals to send to which EU. Special multiplexing techniques result in extraordinary bandwidth and channel capacity.

### BRIEF DESCRIPTION OF THE SEVERAL VIEWS OF THE DRAWING.

Fig. 1 is a block diagram of a unified multimedia distribution system of the present invention
Fig. 2 is a a similar block diagram for analog services.
Fig. 3 is an elevation of a connector mounting surface of an end unit of the present invention.
Fig. 4 is a black diagram of a unified multimedia distribution system of the present invention showing digital services.
Fig. 5 is representational block diagram of the invention in a home environment.
Fig. 6 is a representational block diagram of the invention in a commercial environment.
Fig. 7 is representational block diagram of the invention as an alarm and remote monitor.
Fig. 8 is a similar diagram of the invention controlling appliances.
Fig 9 is representational block diagram of the invention as used to depict odors.

### DETAILED DESCRIPTION OF THE INVENTION.

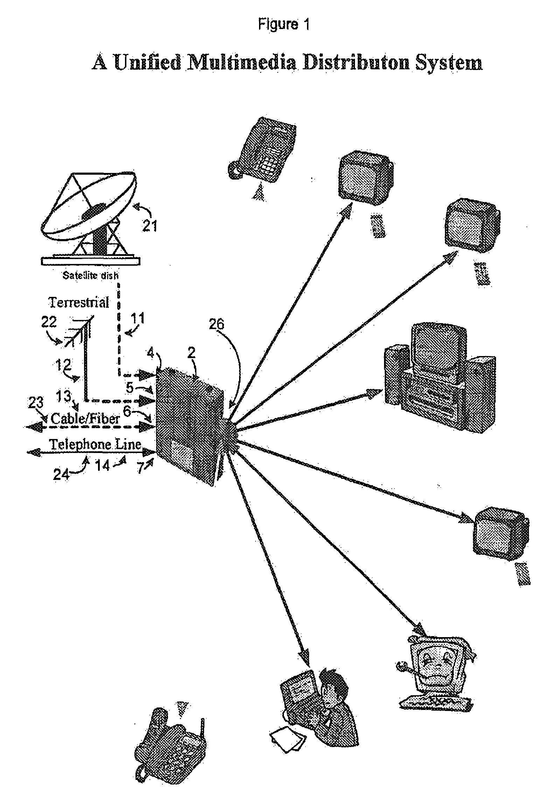

As in fig. 1, this invention relates to a wireless distribution system for home or business, comprising a unitary distribution box 2, called a wireless multimedia center (WMC), which has inputs for receiving signals 11-14 from one or more of:
a satellite dish 21;
a terrestrial antenna 22;
a cable input/output line 23; and/or
a telephone or data line 24 [ISDN, DSL, etc].

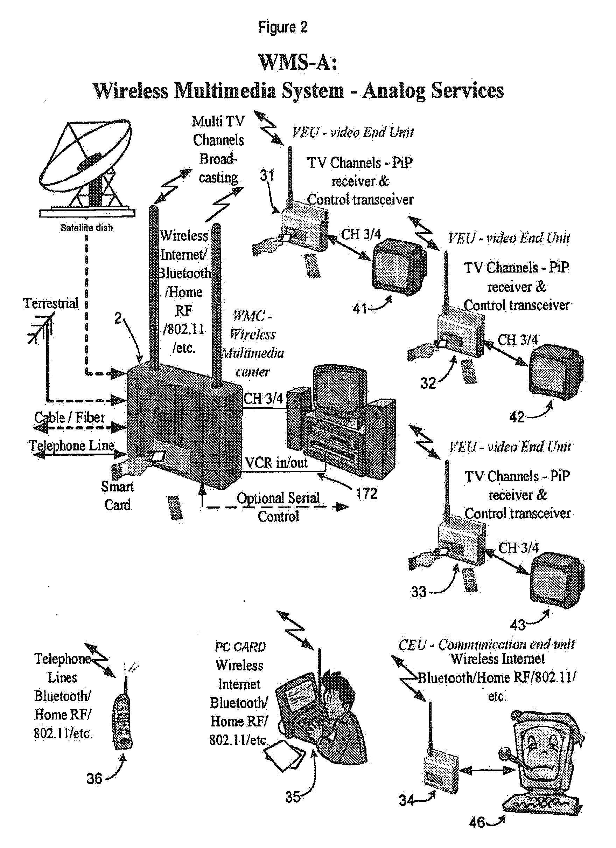

Signals input are then re-broadcast throughout the premises by low energy digital transmissions 26, at energy levels just above background radiation. As in fig. 2, these signals are transmitted to, and received by, individual transceivers 31-36 located throughout the premises. These transceivers are presently contemplated as:
video end unit 31-33, for
   television receivers 41-43;
   VCRs;
   AM/FM broadcasting;
Communications end unit 34-36, for;
   computers 46;
   telephones 36,
   faxes,
   answering machines,
   other telephonic devices, and
   any other electronic apparatus.

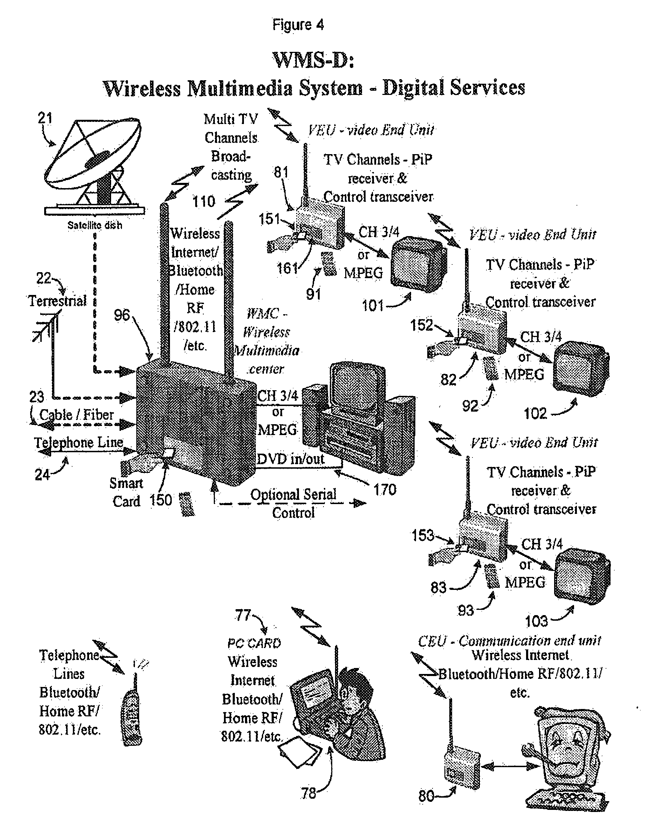

Fig. 4 shows a universal end unit 47, incorporating both Analog VEU 48 and digital VEU 49 and a CEU 50.

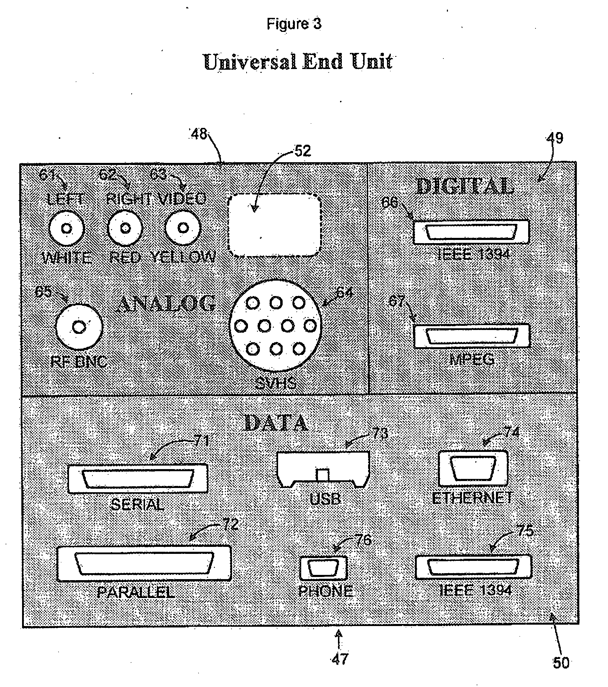

A VEU may be a set-top box 31-33 (fig. 2) or may be incorporated in a TV set instead of, or in addition to, a conventional tuner. As in fig. 3, an analog VEU 48 will incorporate a digital to analog converter 52 and analog connectors, such as RCA connectors 61-63, SVHS 64, or RF co-ax 65 on a set top box.

As in fig. 3, a digital VEU 49 can omit the digital to analog converter and will have digital connectors, on a set top box, such as IEEE 1394 66, and/or MPEG 67 connectors.

An EU can be universal, analog, digital or both, communications, or any combination.

The telephones may either: have wireless communications end units as adapters, or may be standard digital encrypted cordless phones, operating on standard digital cordless phone signals, whereby the wireless multimedia center (WMC) takes the place of various telephone base stations in transmitting the cordless telephone signals throughout the house.

Transceiving communications end units (CEU) may be separate boxes 50 with various ports such as: serial 71, parallel 72, USB 73, Ethernet 74, IEEE 1394 75 or tetephone-and/or-fax-and/or-modem 76. Alternatively, as in fig. 4, a CEU PC card 77 may be inserted into a computer 78.

Transceiving end units 80 may be adapted to Internet communication terminals, lap-top computers; or personal information managers, such as the Palm Pilot™.

Where the transceiver is a video end unit 81-83, an associated remote control unit 91-93 selects programming that wilt be transmitted from the WMC 96, and displayed on the television or radio receiver 101-103 associated with that video end unit 91-93. Thus, where there were 3 TVs 1at3 in the house, there would be 3 video end units 91-93, one for each television receiver 101-103, Each video end unit 81 would have its own remote controller 91 capable of selecting channel sourcing from satellite dish 21, cable 23, roof antenna 22, or any other program source. The video end unit 81 would tell the WMC 96 what signal the VEU was instructed to receive, and the wireless multimedia center (WMC) 96 would select and tune in on that signal and direct a transmission 110 receivable by that video end unit 81. Each video end unit 81 can be instructed to receive two channels to provide picture-in-picture, or a single channel in which the WMC incorporates a first and a second program as a picture-in-picture. VEU's can receive other services such as custom individually tailored advertisements or billing messages, possibly as picture-in-picture.

Software for the system, including video, computer or programmable telephonic services can be maintained and upgraded remotely by the service provider.

Similar simultaneous services, such as simultaneous fax and telephone or individually tailored on-hold messages, can use the multichannel capability of each end unit; VEU or communications end unit.

The multiple video end units could be simultaneously receiving streaming digital data from the central control unit for as many different programs as the allocated channels allow. Each digital channel in the present scheme allows up to 10 simultaneous programs to be transmitted to 10 different end units in the available bandwidth. This limit often is a matter of present convenience and may vary in future embodiments.

As in Fig. 2, where the television receivers 41-43 are standard analog television sets, the Analog System would include a digital-to-analog converter 52 (fig. 3) to convert the digital transmissions throughout the house (fig. 2) to an analog signal interpretable by the receiver 41-43.

In fig. 4, as digital television becomes more common, the digital-to-analog converter part of the system can be dispensed with, and all the television data can be transmitted over the network in a digital fashion. Fig. 2, entitled WMS-A shows the system adapted to analog television receivers, while Fig. 4, WMS-D shows the system adapted to digital television systems.

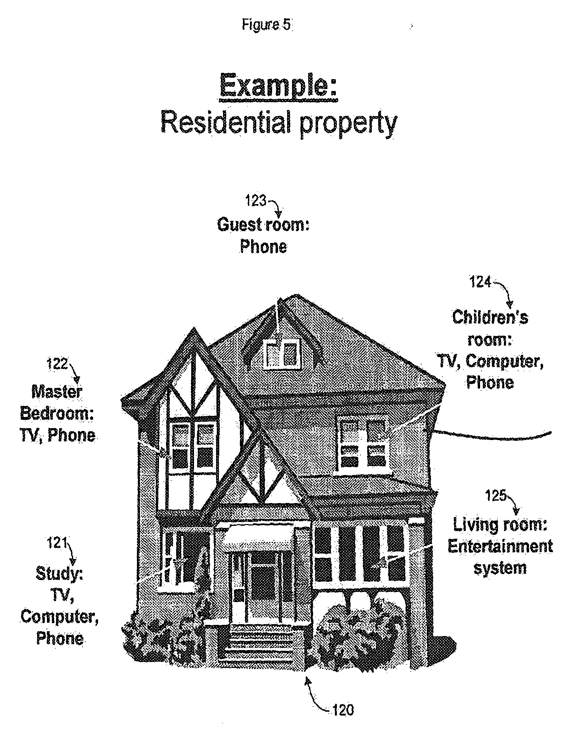

In fig. 5, Example: Residential Property, the services distributed throughout a house 120 are indicated. In this residential property example, a single WMC distributes the services shown to end units located as indicated 121-125 in the various rooms.

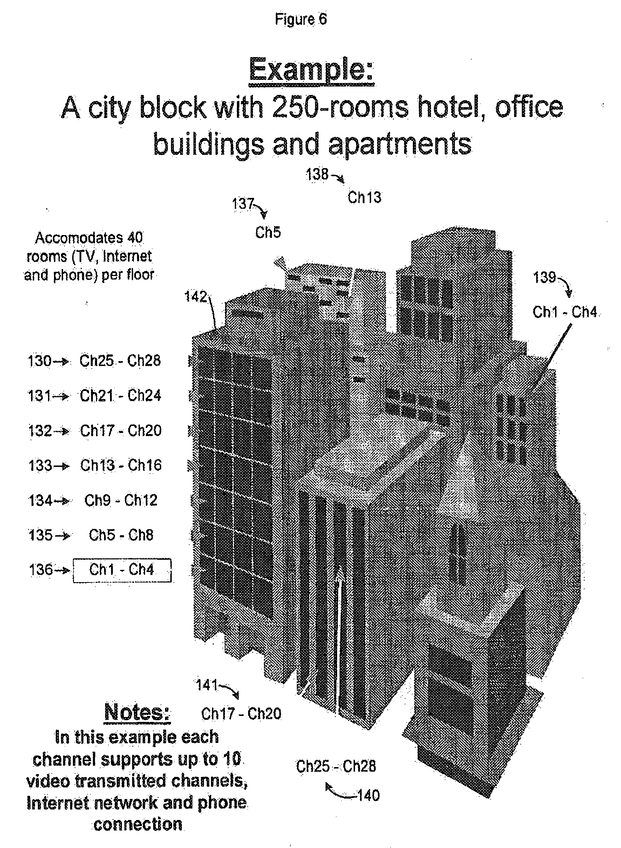

In fig. 6, Example: a City Block..., channel allocation and distribution on a given city block, using different channels 130-136 to avoid cross-talk in the different user's services, in a tight geographical area, is shown. There is some attempt to separate the channels, (such as 136 vs. 139; 130 vs. 140; 132 vs. 141) by distance to avoid cross-talk, but such separation is not necessary; it only serves as an added degree of insurance, because each signal will be digitally encoded and will be incapable of being read by another digital receiver, not programmed to receive the intended signal. In a spread out system such as this, additional WMC's or special repeaters 142 may be used to reach the most distant parts of the system.

Power transmission levels are automatically chosen to minimize additional radiation to the inhabitants and to minimize interference with users of similar systems in near locations, while guaranteeing the needed quality of service. The power level minimization also combines with the aforementioned digital encoding to minimize the risk of cross-talk and interference between multiple systems tight geographic areas.

In general a video protocol received by the WMC will be the video output by the VEU, but the system can also be a protocol converter.

Some of the features which are contemplated by the present system are:
It will be capable of carrying all analog video protocols by being electronically transparent to such protocols.
It will provide picture-in-picture service for every video end unit.
It will distribute cable, satellite, terrestrial feeds, fiber-optic or any other feed, throughout its system.
It will interface to cable/digital subscriber line or POTS modems, either internal to the computer or external to the computer.
It will provide a data feed to all end unit computers in the system area via a wideband data pipe (WDP)and thereby create a network.
It may be adapted to any data protocol such as bluetooth, home RF, 802.11, or proprietary protocol, via soft-RF. Soft RF is essentially a software conveyor that can accommodate any protocol plug-in.
As in fig. 4, It will be smart card 150-154 controlled, so that a subscriber to a service can take his smart card 151, insert it into a local reader 161, which will identify him as being at a local system, and enable him to use his paid-for services on that system, regardless of what services the local system owner has paid to subscribe to.
Since there are no moving parts, the system will be nearly maintenance free. Software type maintenance may be remotely effected by the provider.
The system will allow a central connection for DVD 170, pre-paid programming, video camera,
VCR 172 (fig 2), or time shifting apparatus such as a video hard drive, transmitted to one or more of the VEU's 31-33 or 81-83 in fig. 4.

The digital system of fig. 4 contemplates similar features with the difference that it will be able to read all digital video standards.

One of the benefits of this system will be to create a family of wireless distribution systems. The system is a two-way communication system between the providers and the users. The providers will be able to monitor the use of given copyrighted intellectual property, such as computer programs or movies, and charge royalties for the use of such intellectual property automatically, on-line, and in a way that cannot be scammed easily. The proper royalties on copyrights and on patents can be easily monitored centrally in this system, and accounted for in a trustworthy automatic way. The system could obsolete the Neilsen TV rating system.

Various chip sets and chips can be provided for the central unit, and for the video end units, to allow integration with existing television sets or for other applications requiring data transmission within the structure or area, for applications that may not even yet be contemplated. The system is modular in the use of such chips, and in the easy addition of end units.

It can operate in the unlicenced frequency bands of 5.0-5.8 gigahertz and 2.4 - 2.5 gigahertz or in any other appropriate frequencies that are made available by the electromagnetic spectrum licensing authorities in the various countries.

Television data can use MPEG-1 and MPEG-2 compression, and/or AC3, transmission and multiplexing standards.

As described above, the system makes use of existing standards. However the system also contemplates novel transmission schemes as described below.

A proprietary modulation engine will accommodate the indoor environment.

The Inventors have come up with a proprietary design for simultaneous transmission of the video/audio, wideband data and communications.

The system enables the interception and distribution of multiple services such as telephone, radio, television, digital data, and Internet in a single control box and the distribution of those services throughout the location by wireless digital transmission, to end nodes, that are either specialized or multipurpose, throughout the site.

The typical home unit is contemplated as having distribution capability for at least three televisions, but the invention contemplates modular add-ons that will increase this capability as needed. As for example in fig. 6.

The system contemplates an ability to adapt to new services not known at this time.

The service contemplates a business model in which services may be charged per user, rather than per location. This would be implemented by the provision of a smart card 150-153 (fig. 4) for each user, whereby the user could access his accustomed blend of services whenever he is in a location using the system, regardless of what services are subscribed to by the local user.

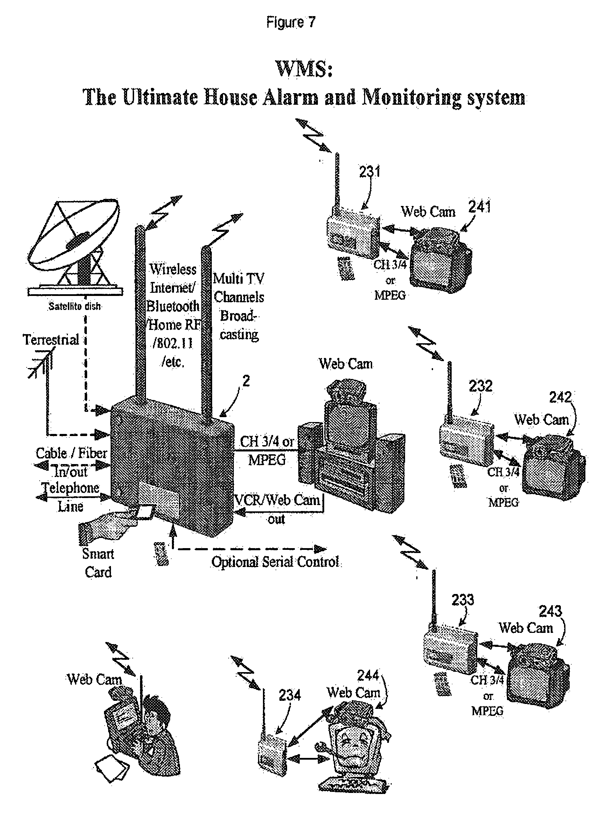

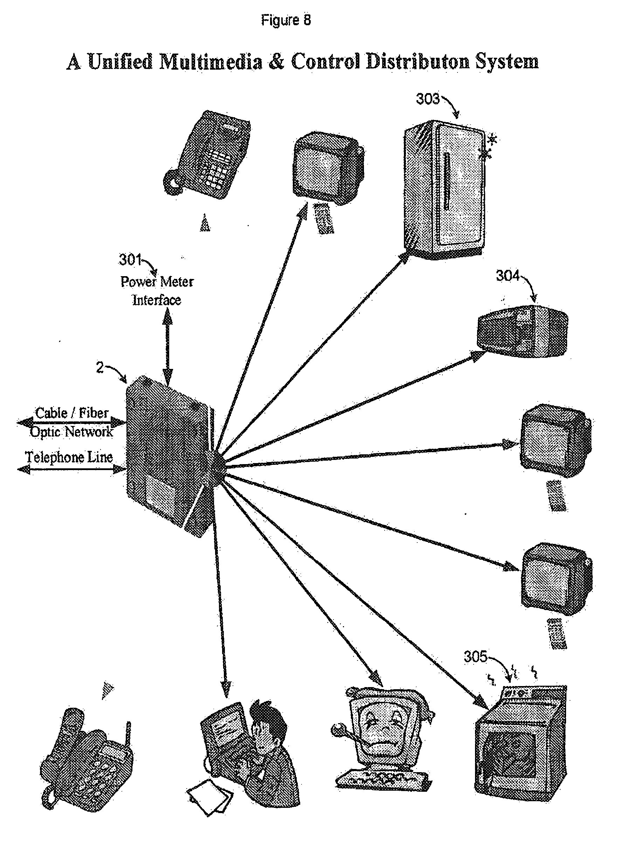

The system can be an alarm (fig. 7) or monitoring system (Fig. 7-8). Software can allow the EU's 231-234 to monitor sensors such as sound, video 241-244, sump level, motion 241-244, electrical consumption 301 (fig. 8), gas use, waster use, and temperature.

The EU's can also be capable of controlling heating, ventilation, AC and home appliances 303-305.

The smart card can allow a subscriber to control and monitor his home remotely wherever he has access to a compatible system, or over modern or Internet connection.

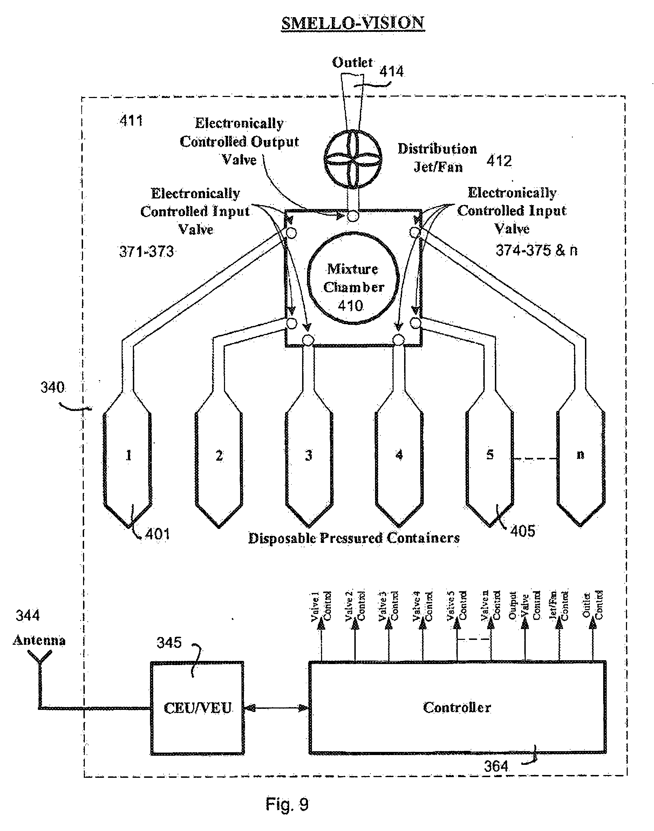

Fig. 9 shows an odor producing apparatus 340, designed to transmit odor, in conjunction with other media, such as movies, or independently. On the proper cue from a media transmission, a signal is received by antenna 344, for CEU/VEU 345, which causes controller 364 to selected electronically controlled input valves, such as 371-375 or n additional valves, to release odors from pressurized containers, such as 401-405 through n. The odors are mixed in the mixture chamber 410, released by output valve 411, and distributed by the fan 412 through outlet 414.

## Claims

1. An apparatus comprising:
one or more end unit devices (31-36), **characterised in that** the one or more end unit devices (31-36) are located at a customer premises, the or each end unit device (31-36) being adapted to receive one or more wireless selected multimedia signals consisting essentially of multimedia signals broadcast from a multimedia device (2) at the customer premises by orthogonal frequency division multiplexing, OFDM, the multimedia signals being selected from the group consisting of audio signals, video signals, and combinations thereof, wherein at least one end unit device (31-36) is located inside a building at the customer premises.

2. The apparatus of claim 1 wherein one or more of the end unit devices (31-36) comprises one or more video end units, VEU's, (31-33) adapted to receive one or more segments of the selected multimedia signals, at least one of the VEU's (31-33) being located inside a building at the customer premises.

3. The apparatus of claim 1 or 2 wherein one or more end unit device (31-36) is adapted to wirelessly communicate selected broadband data between the end unit device (31-36) and the multimedia device (2).

4. The apparatus of claim 1-2 or 3 wherein one or more end unit device (31-36) is integrated with a consumer electronic device.

5. The apparatus of claim 2-3 or 4 wherein one or more of the VEU's (31-33) is integrated with a communication end unit, CEU (34-36).

6. The apparatus of claim 1-4 or 5 wherein the customer premises comprises multiple sub-premises comprising one or more end unit device (31-36).

7. A method of using the apparatus of any of claims 1-5 or 6.

8. The method of claim 7 further comprising the multimedia device (2) selecting the selected multimedia signals.

9. The method of claim 7 or 8 comprising the one or more end unit device (31-36) announcing its presence and registering with the multimedia device (2).

10. The method of claim 7-8 or 9 comprising the one or more end unit device (31-36) receiving personalized advertising transmitted from the service provider.

11. The method of claim 7 -9 or 10 further comprising the multimedia device (2) receiving information provided by a user identifier to identify the user's authorized level of service.

12. The method of claim 7-10 or 11 further comprising receiving information provided by a user identifier to identify the user's authorized level of service at a different device located off the customer's premises.

13. The method of claim 7-11 or 12 further comprising decrypting the selected multimedia signals.

## Patentansprüche

1. Vorrichtung, umfassend:
ein oder mehrere Endeinheitgeräte (31-36), **dadurch gekennzeichnet, dass** sich das eine oder die mehreren Endeinheitgeräte (31-36) an einem Kundenstandort befinden, wobei das oder jedes Endeinheitgerät (31-36) dazu ausgelegt ist, ein oder mehrere drahtlose ausgewählte Multimediasignale zu empfangen, die im Wesentlichen aus Multimediasignalen bestehen, die von einem Multimediagerät (2) am Kundenstandort durch orthogonales Frequenzmultiplexen, OFDM, ausgestrahlt werden, wobei die Multimediasignale aus der Gruppe ausgewählt sind, die aus Audiosignalen, Videosignalen und Kombinationen davon besteht, wobei sich zumindest ein Endeinheitgerät (31-36) innerhalb eines Gebäudes am Kundenstandort befindet.

2. Vorrichtung nach Anspruch 1, wobei eines oder mehrere der Endeinheitgeräte (31-36) eine oder mehrere Videoendeinheiten, VEUs, (31-33) umfasst, die dazu ausgelegt sind, ein oder mehrere Segmente der ausgewählten Multimediasignale zu empfangen, wobei sich zumindest eine der VEUs (31-33) innerhalb eines Gebäudes am Kundenstandort befindet.

3. Vorrichtung nach Anspruch 1 oder 2, wobei eines oder mehrere Endeinheitgeräte (31-36) dazu ausgelegt ist, ausgewählte Breitbanddaten zwischen dem Endeinheitgerät (31-36) und dem Multimediagerät (2) drahtlos zu kommunizieren.

4. Vorrichtung nach Anspruch 1 bis 2 oder 3, wobei ein oder mehrere Endeinheitgeräte (31-36) mit einem elektronischen Verbrauchergerät integriert ist.

5. Vorrichtung nach Anspruch 2 bis 3 oder 4, wobei eine oder mehrere der VEUs (31 -33) mit einer Kommunikationsendeinheit, CEU, (34-36) integriert ist.

6. Vorrichtung nach Anspruch 1 bis 4 oder 5, wobei der Kundenstandort mehrere Teilstandorte umfasst, die ein oder mehrere Endeinheitgeräte (31-36) umfassen.

7. Verfahren zur Verwendung der Vorrichtung nach irgendeinem der Ansprüche 1 bis 5 oder 6.

8. Verfahren nach Anspruch 7, ferner umfassend das Multimediagerät (2), das die ausgewählten Multimediasignale auswählt.

9. Verfahren nach Anspruch 7 oder 8, umfassend, dass das eine oder die mehreren Endeinheitgeräte (31-36) ihre Anwesenheit ankündigen und bei dem Multimediagerät (2) registrieren.

10. Verfahren nach Anspruch 7 bis 8 oder 9, umfassend, dass das eine oder die mehreren Endeinheitgeräte (31-36) vom Serviceprovider übertragene personalisierte Werbung empfangen.

11. Verfahren nach Anspruch 7 bis 9 oder 10, ferner umfassend, dass das Multimediagerät (2) Information empfängt, die von einer Benutzerkennung bereitgestellt wird, um das autorisierte Dienstniveau des Benutzers zu identifizieren.

12. Verfahren nach Anspruch 7 bis 10 oder 11, ferner umfassend das Empfangen von Information, die von einer Benutzerkennung bereitgestellt wird, um das autorisierte Dienstniveau des Benutzers an einem anderen Gerät zu identifizieren, das sich außerhalb des Kundenstandorts befindet.

13. Verfahren nach Anspruch 7 bis 11 oder 12, ferner umfassend das Entschlüsseln der ausgewählten Multimediasignale.

## Revendications

1. Appareil comprenant :
un ou plusieurs dispositifs terminaux (31-36), **caractérisé par le fait que** l'un ou les plusieurs dispositifs terminaux (31-36) sont situés dans les locaux d'un client, le ou chaque dispositif terminal (31-36) étant apte à recevoir un ou plusieurs signaux multimédia sélectionnés sans fil consistant essentiellement en signaux multimédia émis depuis un dispositif multimédia (2) dans les locaux du client par multiplexage par répartition orthogonale de la fréquence (MROF), les signaux multimédia étant sélectionnés dans le groupe consistant en des signaux audio, des signaux vidéo et leurs combinaisons, où au moins un dispositif terminal (31-36) est situé à l'intérieur d'un bâtiment dans les locaux du client.

2. Appareil conforme à la revendication 1, où un ou plusieurs des dispositifs terminaux (31-36) comprennent une ou plusieurs unités terminales de visualisation (UTV) (31-33) aptes à recevoir un ou plusieurs segments des signaux multimédia sélectionnés, au moins une des UTV (31-33) étant située à l'intérieur d'un bâtiment dans les locaux du client.

3. Appareil conforme à la revendication 1 ou 2, où un ou plusieurs des dispositifs terminaux (31-36) est apte à communiquer sans fil des données gamme large sélectionnées entre le dispositif terminal (31-36) et le dispositif multimédia (2).

4. Appareil conforme à la revendication 1 à 2 ou 3, où un ou plusieurs des dispositifs terminaux (31-36) sont intégrés à un dispositif électronique grand public.

5. Appareil conforme à la revendication 2 à 3 ou 4, où une ou plusieurs des UTV (31 -33) est intégrée à une unité terminale de communication (UTC) (34-36).

6. Appareil conforme à la revendication 1 à 4 ou 5, où les locaux du client comprennent de multiples sous-locaux comprenant un ou plusieurs dispositifs terminaux (31-36).

7. Procédé d'utilisation de l'appareil conforme à une quelconque des revendications 1 à 5 ou 6.

8. Procédé conforme à la revendication 7, où de plus le dispositif multimédia (2) sélectionne les signaux multimédia sélectionnés.

9. Procédé conforme à la revendication 7 ou 8, où le ou les plusieurs dispositifs terminaux (31-36) annoncent leur présence et s'enregistrent auprès du dispositif multimédia (2).

10. Procédé conforme à la revendication 7 à 8 ou 9, où le un ou plusieurs dispositifs terminaux (31-36) reçoivent des publicités personnalisées transmises depuis le prestataire de services.

11. Procédé conforme à la revendication 7 à 9 ou 10, où le dispositif multimédia (2) reçoit des informations fournies par un identifiant d'utilisateur pour identifier le niveau de service autorisé de l'utilisateur.

12. Procédé conforme à la revendication 7 à 10 ou 11, recevant en outre des informations fournies par un identifiant d'utilisateur pour identifier le niveau de service autorisé de l'utilisateur à un dispositif différent situé en dehors des locaux du client.

13. Procédé conforme à la revendication 7 à 11 ou 12, comprenant de plus le décryptage des signaux multimédia sélectionnés.
